# EUROPEAN PATENT APPLICATION

(11) **EP 1 811 677 A1**
(43) Date of publication of application: **25.07.2007**
(21) Application number: 06100664.9
(22) Date of filing: 20.01.2006
(51) Int. Cl.: H04B 1/16, H02J 7/34

(54) **Power management system for a smart card module**

(71) Applicant: BlueSky Positioning Ltd, London 1G 9QR (GB)
(72) Inventor: Savolainen, Risto Kalevi, 06640, LE ROURET (FR); Hellgren, Harri, 01630, St Genis-Pouilly (FR)
(74) Representative: Valkeiskangas, Tapio Lassi Paavali

(57) **Abstract**

The invention relates to a power management system (2-50, 3-50) for a subscriber identity module (1-4, 5-1) comprising contacts (5-3) for connecting to a mobile device (1-1). The system comprises at least one power storage unit (2-3, 3-3, 5-6) for charging energy from a power supply feed of the mobile device (1-1) via one or more contacts (5-3); and a control unit (2-4, 3-4, 5-4) for controlling the charging of the at least one power storage unit (2-3, 3-3, 5-6) and for controlling the discharging of the at least one power storage unit (2-3, 3-3, 5-6) to at least one element (2-1, 2-2, 3-1, 3-2, 5-2, 5-5) in the subscriber identity module (1-4, 5-1).

## Description

### Field of the invention

The present invention relates to communications systems, and more particularly to a power management system for a mobile device in a communications system.

### Background of the invention

The accurate location of user equipment, such as a GSM (Global System for Mobile Communications) mobile device, cannot be determined using the information from a cellular network. The information enables the location only of an accuracy of about 100-300 meters in rural areas and 50-100 meters in city areas. For example, in a case of an emergency call, it is vital to find out the exact location from which the call was made to be able to get help to the site as fast as possible.

GPS (Global Positioning System) receivers could offer a better accuracy, but they are expensive and not widely carried and used by public. GPS receivers do not work reliably or at all indoors and in canyons, like in between high buildings. There are also Assisted GPS (AGPS) systems working in conjunction with terrestrial cellular networks.

It is also possible to add a high accuracy satellite positioning system functionality to the existing non-satellite positioning system user equipment without any modifications to the device itself but only by inserting a new subscriber identity module, SIM, comprising a satellite positioning system receiver and an antenna.

However, if the current consumption of the apparatus for locating user equipment exceeds the maximum current consumption limitation, the SIM card may not work continuously or at all. As a consequence, user equipment may reject or switch off the SIM card, which requires current above the maximum as described in the standard.

### Brief disclosure of the invention

An object of the present invention is thus to provide a method and an apparatus for implementing the method so as to overcome the above problem. The objects of the invention are achieved by a method and an arrangement, which are characterized by what is stated in the independent claims. The preferred embodiments of the invention are disclosed in the dependent claims.

The invention, a power management system for a smart card module comprising contacts for connecting to a device, is based on the idea of using at least one power storage unit for charging energy from a power supply feed of the device via one or more contacts and using a control unit for controlling the charging of the at least one power storage unit and for controlling the feeding of energy to at least one element in the smart card module by controlling the discharging of the at least one power storage unit and/or by controlling the feeding of the energy from the power supply feed of the device.

An advantage of the invention is that temporary disconnections may be avoided and the operation may be continuous without any rejections or switching offs of the card thereby providing a more reliable positioning, for example.

### Brief description of the drawings

In the following the invention will be described in greater detail by means of preferred embodiments with reference to the accompanying drawings, in which
Figure 1 shows a cross section view of a mobile device;
Figure 2 shows a power management system according to an embodiment of the invention;
Figure 3 shows a power management system according to an embodiment of the invention;
Figure 4 shows a power management system according to an embodiment of the invention;
Figure 5 shows a subscriber identity module according to an embodiment of the invention;
Figure 6 shows a signalling chart of the function of one embodiment of the power management system; and
Figures 7A, 7B, 8 and 9 illustrate an implementation of one embodiment of the power management system.

### Detailed description of the invention

The device of the invention and its embodiments may be any mobile device like a 2G (Generation), a 2.5G, a 3G, a 3.5G or a 4G mobile device. It may be e.g. a mobile station equipped with different kind(s) of functionalities like a mobile TV, a cellular mobile station, a communicator or a computer, or a non-mobile device, such as a smart card reader installed to a door opener, cash dispenser, personal computer, set-top box, etc. Thus, the detailed structures and operations of the device and the communications systems are not relevant to the invention, and therefore they are described only to the extent that helps understanding the invention. In the following the invention is described using a mobile device as an example without restricting the invention thereto.

Furthermore, it should be noted that the invention may be applied to different kinds applications, such as positioning systems and satellite systems, and to different kinds of communications systems and networks, like fixed networks and packet switched networks or combination thereof and/or to wireless data transmission networks, such as Mobile-IP (Internet Protocol) networks and user equipment thereof.

For the invention and its embodiments a SIM (Subscriber Identity Module) card may be defined to be a card removably insertable into the user equipment, the card containing data for subscriber identification and/or encipherment of radio communication and/or other security related information. However, it is to be noted that the SIM card according to the invention and its embodiments may, but does not have be able, to identify the subscriber. The card may be e.g. a SIM card or a USIM (Universal Subscriber Identity Module) card. The structure, the size, the physical dimensions, the weight and the layout of the card may be as described as follows, but they may also different ones.

The SIM card may also be adapted to fit to different kinds of user equipment, to different kinds of mobile devices such that when inserted e.g. into a conventional cellular mobile station it may adapt to the system of the conventional mobile station and cause it to operate for locating the mobile station.

The SIM card may also comprise and/or be in cooperation with logic(s) and/or software program(s) or application(s), which may control the operation of the invention and its embodiments. The logic(s), the program(s) and/or the application(s) may be in the SIM card, in communication with the SIM card and/or it/they may be loaded to the SIM card and/or to the user equipment for carrying out the invention and its embodiments. The applications may be Java or Symbian applications, for example.

The SIM card may be a virtual or a separate, stand-alone card. For the invention and its embodiments the SIM card may be partly or wholly fixed to the user equipment or partly or wholly removably insertable into the user equipment. It may thus comprise one or more parts. The SIM card may also have different sizes, thicknesses and volumes. Although in the following the name SIM card will be used, it is to be understood that it also refers to different kind of smart cards like to an ICC card (Integrated Circuit Card) or to a chip card. What is important for the invention and its embodiments is that it is a module with embedded information receiver and/or transmitter and/or an antenna. The invention is especially suitable for a low noise transmitter/receiver but the invention may be utilized with other kind of transmitters/receivers.

Although the names SIM card and smart card are used, the card or corresponding element according to the invention and its embodiments may also be another type of a card, a circuit board, and/or other electronics that may receive data from a remote application, such as a positioning system, and/or process said data. The element may comprise one or more modules, which may be separate modules or integrated modules and which modules may process one or more independent or interrelated functions.

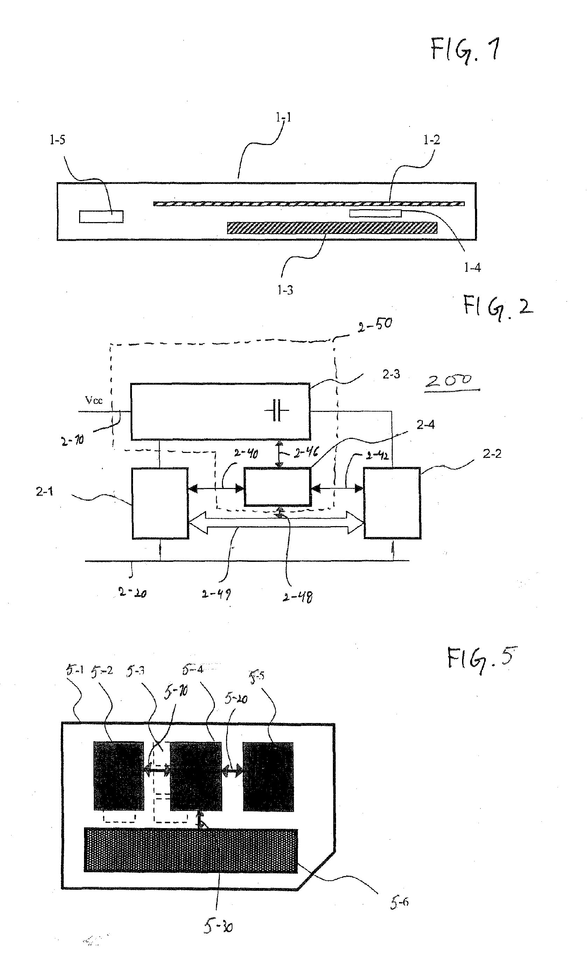

Figure 1 shows a cross section view, a side view of a mobile device 1-1. It comprises of a circuit board 1-2, an antenna 1-5 and a battery 1-3. Figure 1 also shows an element 1-4 according to the invention. The element 1-4 may be e.g. the SIM (Subscriber Identity Module) card or a USIM card (Universal Subscriber Identity Module) comprising a SIM processor, some other card or combination of different cards, and it may comprise an RF receiver and/or transmitter. In other words, the RF receiver/transmitter may be embedded in the element 1-4. In embodiments in which the element 1-4 comprises both a receiver and a transmitter, it may be said to comprise an RF transceiver. In addition also other functional blocks or subsystems, like co-processors of the SIM processor, may be embedded in the element 1-4.

The RF transceiver or another subsystem may be used continuously, in short periods with a know interval, or an ad-hoc basis. This means, for example, that the receiving of the positioning information and/or a positioning fix may be processed during a predetermined period of time or until a limit of a variable is reached. For example, if the current consumption of the GPS receiver and/or the SIM processor and/or another (electronic) subsystem exceeds the maximum current supply from the mobile device, the subsystem(s) may run until the power storage unit runs out of adequate current/voltage and/or the control unit switches off the power storage unit or switches the power mode of the subsystem to 'off', 'sleep' or 'standby' or similar low power mode.

Figures 2, 3 and 4 shows different examples of a power management system according to the invention. In Figures 2, 3, and 4 the arrow-headed lines illustrate information and signalling exchange.

Figure 2 shows a power management system 2-50 according to an embodiment of the invention. The power management system 2-50 comprises a power storage unit 2-3 and a control unit 2-4. The power storage unit may comprise one or more capacitors or group of capacitors. The capacitors may be such designed that a first capacitor is for a first subsystem and a second capacitor is for a second subsystem. The first subsystem may be an analogue subsystem and the second subsystem may be a digital subsystem. Alternatively one capacitor or one group of capacitors and/or other power supplying means may be designed to feed two or more subsystems. Also other number of power storage units and the subsystems and their connections may be implemented.

The power management system 2-50 may thus provide locally stored power for the subsystems, and other functional blocks, if any, in the arrangement 200 of Figure 2, and/or control the current/power consumption of the whole SIM card and/or the current/power consumption of one or more of the subsystems 2-1, 2-2 of the arrangement 200. In Figure 2 these subsystems are the GPS receiver 2-2 and the SIM processor 2-1. Instead or in addition to these elements, the power may be provided and the operation be controlled for one or more other elements/subsystems in the card.

As described above, the power management system may also comprise the control unit 2-4. It may negotiate with the SIM processor 2-1, with the GPS receiver 2-2 and with the power storage unit 2-3 and in response to said negotiation control the current feed from the power storage unit e.g. to the GPS receiver. The control unit may control the discontinuation or switching off of the operation of the GPS receiver and/or the current feed. The control unit may also control the charging of the power storage unit(s). The charging may also be processed simultaneously with the use of the subsystems, such as positioning procedures. The control unit may also control (illustrated by 2-48) different signals (2-49) between the subsystems, signals (2-46) between the control unit and the power storage unit, signals (2-40, 2-42) between the control unit and a subsystem, such as the SIM processor. The control unit may also process different status information requests of the subsystems, such as the SIM processor, and the power storage unit. However, at simplest, the control unit may be a constant-current diode or a field effect transistor or a bipolar junction transistor coupling without any controlling capability, or voltage/current detector(s), or any other intelligent component.

Although the control unit is illustrated here and below as a separate unit, the control unit may be integrated with any subsystem or functional block in the SIM card, such as the SIM processor or the GPS receiver.

The power management system 2-50 may thus obtain information e.g. on different predetermined levels of the current and/or power consumption. There may also be some limits within which the consumption(s) must be maintained. The consumption may be peak consumption and/or an average consumption. At least partly in response to said information the power/current consumption may be controlled. The power management system may be the controlling system or it may produce e.g. a signal for another system or element for controlling and/or adjusting in controlling the current and/or the power consumption.

When controlling the power storage unit 2-3 and/or the power supply 2-10, the control unit may, as stated above, detect 2-46 the status of the power storage unit. Alternatively, the control unit may discharge the power storage unit for a predetermined duration, the length of which may vary. The control unit may also detect 2-40, 2-42 signals from the (electronic) subsystems in the card, for example from the SIM processor 2-1 and the satellite positioning transceiver 2-2. The status information may include information on the voltage level of the detected signals, information on the loading voltage level of the power storage unit, information on the state and/or mode of operation of the satellite receiver, control information from the SIM card and/or information on the state and/or the mode of operation of the location data reception, for example. The control unit may detect whether the location data reception is on, off, idle or in some other state. Depending on the status of one or more signals and/or statuses of the power storage unit, the control unit 2-4 may charge or assist in charging the power storage unit 2-3 or discharge or assist in discharging the power storage unit 2-3 e.g. by connecting the power to at least one subsystem, component in the SIM card. The power may also be connected to all or only to one selected electronic component in the card. Alternatively the power supply feed may directly be used for the electronic system in the card. Alternatively or in addition, it is also possible to feed the power outside of the SIM card.

One possibility for the charging process is to use the difference between the maximum current from the card reader of the mobile device and the actual current consumption of one or more electronic components in the card and/or the actual current consumption of the card. This difference may be detected by the control unit and used as an initial and/or a target value for the charging process.

The power management system may be applied to situations where the peak current consumption of one or more electronic elements in the SIM card exceeds the maximum limit of the supply current of the SIM card but the average current consumption is at or below the maximum supply current of the SIM card. The maximum peak and average current consumptions, when e.g. the reception of the satellite signals is on, may be specified by specification of the SIM card. The power storage unit may then be discharged e.g. for a predetermined period and after that may be charged for another predetermined period. The control unit may detect the current consumption of the SIM card and limit and/or disconnect the current consumption, if needed. In other words, the power management system may detect the voltage level and/or current consumption/need of one or more subsystems or it may function only as a current limiting system.

For different kind of situations or examples there may be used different transceivers or one transceiver adapted to different functions or consumptions.

The power management system may also have one or more power outputs at different current and/or voltage levels. The different outputs may be implemented e.g. by different capacitors and/or regulators adapting the voltage(s) to the appropriate level(s).

As stated above, the control unit may control the charging voltage level. This may be done e.g. by a charge pump. In one embodiment the mobile device outputs 1,8V, but the GPS receiver needs 2,6V. Thus the voltage level is increased e.g. to the level of 3,0V. This may be done e.g. by one or more capacitors. From the capacitor the voltage is fed to the GPS receiver. The power management system may also protect the SIM chip and the mobile device against over voltage situations and over current situations.

The power storage unit may store the power needed for the RF transceiver to perform one or more position fixes. Alternatively the power storage unit may partially store the needed power. This means e.g. that part of the power needed is stored in the power storage unit and part of the power is stored into the battery of the mobile device or into another power storage unit. Alternatively or in addition the whole or part of the power/current needed for the subsystem(s) may be fed from the power feed via one or more SIM card contacts. Also different implementations are possible.

For storing the power needed and/or for discharging the required power, the power storage unit comprises one or more components which may be, as disclosed above, capacitors and/or supercapacitors and/or ultracapacitors. A component for storing the power has to be small enough and be able to store adequate charge (e.g. above 10F/cm3) to feed the subsystem during the peak current consumption, whose maximum duration may also be known. The supercapacitor or the ultracapacitor may be defined to be a dual-layer capacitor or an aerogel capacitor, which may be made of material (e.g. of mesoporous carbon layers), whose area may be made large e.g. by nano technology and whose capacitance per volume may be extremely high, like 12 to 88 F/cm³. In other words it may be said that the capacitor(s) needs small area with respect to the capacitance value.

The charging and the discharging of the capacitors may be implemented in different ways. In one example the power storage unit charges the capacitors in serial mode and discharges them in parallel mode. The charging operation may thus be implemented by using 3V voltage supply and the discharging operation may be implemented by using 1.5V voltage supply. In another example the power storage unit charges the capacitors in parallel mode and discharges them in serial mode. Alternatively to the examples or in addition to them, the power storage unit may comprise one or more rechargeable batteries.

In Figure 2 the power storage unit may discharge to the electronic components of the card, i.e. to the SIM processor 2-1 and/or to the RF transceiver 2-2. The power supply feed (not shown in Figure 2) is connected to the supply voltage Vcc 2-10 (pin 1 of the SIM card) and to ground voltage 2-20 (pin 5 of the SIM card) and further to the battery of the mobile device (not shown in Figure 2) via the contacts.

The power management system may be an in-card, power management system which may locate in the SIM card and may provide locally stored power for the electronics 2-4 of the smart card or of the subscriber identity module.

It is also possible for the user to control the power management system and obtain information about its state. This may be implemented e.g. such that the mobile device may communicate with the SIM processor via which information may be exchanged with the control unit. The user may also use menu commands on the mobile device to request information about the power storage status and get a result visually on the display of the device and/or as an audio data.

It is possible that one or more power storage units and their outputs may be controlled independently. The power management system, the transceiver and the other electronic components may be integrated on the same substrate of an integrated circuit or a circuit board. The RF transceiver and/or other electronic components and/or the power management system may also be separate integrated circuits or made of discrete components.

The control unit 2-4 of the power management system may adjust the charging/discharging voltage and current according to the characteristics of the used power storage unit. In addition, as described above, the control unit may control the charging of the power storage unit using e.g. the current from the subscriber identity module power supply through the SIM contacts. The control unit may control one or more power storage units or power storage subunits.

When controlling the charging and/or the discharging of the power storage unit, the control unit may inform the SIM processor about the status of itself and power storage units e.g. in the situation where the power storage unit is not adequately charged. The control unit may also limit and/or control the total current used by the subscriber identity module. Alternatively, or in addition, the SIM processor may perform the control unit functionality or some parts of the functionality. The control unit may use the input from the SIM processor and/or RF transceiver and/or the power storage unit for the power management. The control unit may also switch the power mode of the RF transceiver to at least one of the following states: on, off, sleep or standby.

Figure 3 shows a power management system 3-50 according to an embodiment of the invention, the power management comprising a power storage unit 3-3 and a control unit 3-4. They may be similar to one of the above-described power storage units and control units. Figure 3 illustrates a situation in which one ore more subsystems may be connected directly to the power supply 3-10 of the SIM card and the power storage unit 3-3 and one or more power storing elements, like capacitors, from the power storage unit may feed one or more electronic subsystems placed after the power storage unit.

The arrangement 300 further comprises a GPS receiver 3-2 for receiving positioning information and other information, and the SIM processor 3-1 for processing the information both connected to the ground voltage 3-20 (pin 5 of the SIM card) and further to the battery of the mobile device (not shown in Figure 3) via the contacts. The power storage unit 3-3 and the SIM processor are connected to a power supply feed (not shown in Figure 3) via a supply voltage Vcc 3-10 (pin 1 of the SIM card). As described above with Figure 2, and illustrated in Figure 3 by 3-40, 3-42, 3-46 and 3-48, the control unit 3-4 may control different signals (3-49) between the subsystems, communicate status information and control signal(s) 3-49 between the control unit and the SIM processor and between the control unit and the GPS receiver and control the power storage unit. The power storage unit 3-3 may provide locally stored energy for the other elements of the power management system. In Figure 3 the power management system is adapted to control the current and/or the voltage and/or the power consumption of the GPS receiver 3-2, and the SIM processor may obtain the current directly from the contacts of the SIM card or from the power storage unit. In other words, in this example the SIM processor may be fed only from the battery of mobile device via the power supply feed 3-10, whereas in the example illustrated in Figure 2 the SIM processor may be fed simultaneously from both the power storage unit and from the power supply feed. Thus, in this example the current consumption of the SIM card may not be known whereas in the example shown in Figure 2 the current consumption of the SIM card may be detected. In the example of Figure 3 the power storage unit is not connected to the SIM processor but the power storage unit is connected to the control unit for discharging to the RF transceiver.

Figure 4 shows a power management system according to an embodiment of the invention in which embodiment there are two power storage units 4-3a, 4-3b and two switches 4-70a, 4-70b controlled by a control unit 4-4 and arranged so that the switches are between the power storage units. In other words, a power storage unit comprises two separate power storage subunits. The power storage units 4-3a, 4-3b and the control unit 4-4 may be similar to the above-described corresponding units, and the power storage units need not to be identical. The arrangement 400 further comprises subsystems, such as a GPS receiver 4-2 for receiving positioning information and other information, and the SIM processor 4-1 for processing the information. The SIM processor 4-1 is connected to the ground voltage (4-20) (pin 5 of the SIM card) and further to the battery of the mobile device (not shown in Figure 4) via the contacts, to a power supply feed (not shown in Figure 4) via a supply voltage Vcc 4-10 (pin 1 of the SIM card) and to a first power storage unit 4-3a. The GPS receiver 4-2 is connected to a second power storage unit 4-3b, and via a first switch 4-70a to a power supply feed (not shown in Figure 4) via a supply voltage Vcc 4-10 (pin 1 of the SIM card) and via a second switch 4-70b the ground voltage (4-20) (pin 5 of the SIM card) and further to the battery of the mobile device (not shown in Figure 4) via the contacts. In other words, the switches are also between the two subsystems. Thus, also the power supplies of subsystems 4-1 and 4-2 may be disconnected from each other.

As described above with Figure 2, and illustrated in Figure 4 by 4-40, 4-42, 4-46, 4-46' and 4-48, the control unit 4-4 may control different signals (4-49) between the subsystems, communicate status information and control signal(s) 4-49 between the control unit and the SIM processor and between the control unit and the GPS receiver and control the power storage units. In addition, the control unit may communicate with the switches by control signals 4-44 and 4-44' in order to connect or disconnect the switch(es) 4-70a and 4-70b. Thus, the control unit may control the subsystems and switches independently of each other, and regardless whether or not the switches are connected or disconnected.

When at least one power storage unit has charged power from the power supply feed of the mobile device via one or more contacts, the discharging of the at least one power storage unit to at least one electronic subsystem element in the subscriber identity module may be independent from the power supply feed of the mobile device. This means that the power supply feed or the return path or both may be disconnected and the operation of the subsystem(s) may be independent from each other. Thus, the embodiment shown in Figure 4 provides separate power supply to the subsystem, or more precisely to the GPS receiver processing RF signals and to the SIM processor. The GPR receiver may be an analogue subsystem and the SIM processor may be a digital subsystem. A further advantage of this is that due to the separation, different noises and interferences, such as digital interferences, will not migrate along the supply line 4-10 or the ground line 4-20 to the analogue subsystem 4-2, when the switch or switches is/are in position disconnecting the line(s). In other words, by using the two switches for one element, such as the GPS receiver, protection against interferences caused by the supply feed and the ground is provided thereby providing a better performance for subsystems/blocks that are sensitive to interferences.

Although not illustrated in Figure 4, it is obvious for one skilled in the art how to implement the invention with one switch (either with 4-70a or 4-70b, for example) or with more than two switches, as well as how to implement the embodiment 4 with only one power storage unit, for example 4-3b.

in a further embodiment of the invention, the control unit may be connected between the power supply feed and one or more power storage unit(s), i.e. the power storage unit(s) may be connected to the power supply feed via the control unit.

Figure 5 shows a subscriber identity module 5-1 according to an embodiment of the invention. It comprises the GPS receiver 5-5, e.g. for receiving of radio signals from the transmitters and for making the content of the information of the radio signals available to SIM card. Fig 5 also comprises the SIM processor 5-2 and a power management system according to an embodiment of the invention, the power management system being illustrated by the control unit 5-4 and the power storage unit 5-6. Through the contacts 5-3 the SIM card may be in communication with the mobile device. (Holders (not shown in Figure 5) and the contacts actually form a smart card reader in the subscriber identity module.) The communication 5-10 between the SIM processor and the control unit may be e.g. status information and control signals and the communication 5-20 between the control unit and the GPS receiver may also be e.g. status information and control signals. The antenna for the receiving of the radio signals e.g. from one or more satellites is not shown in Fig 5.

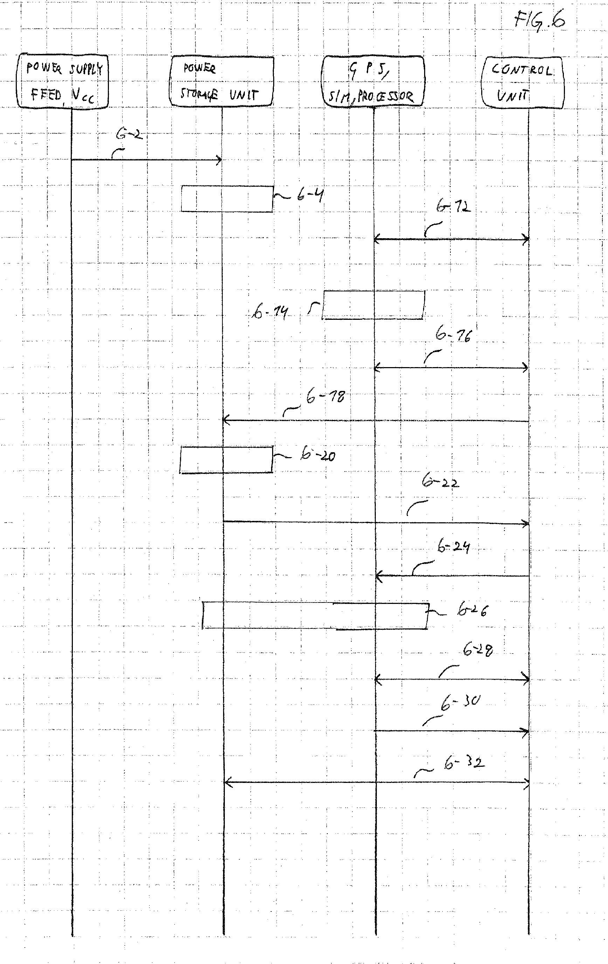

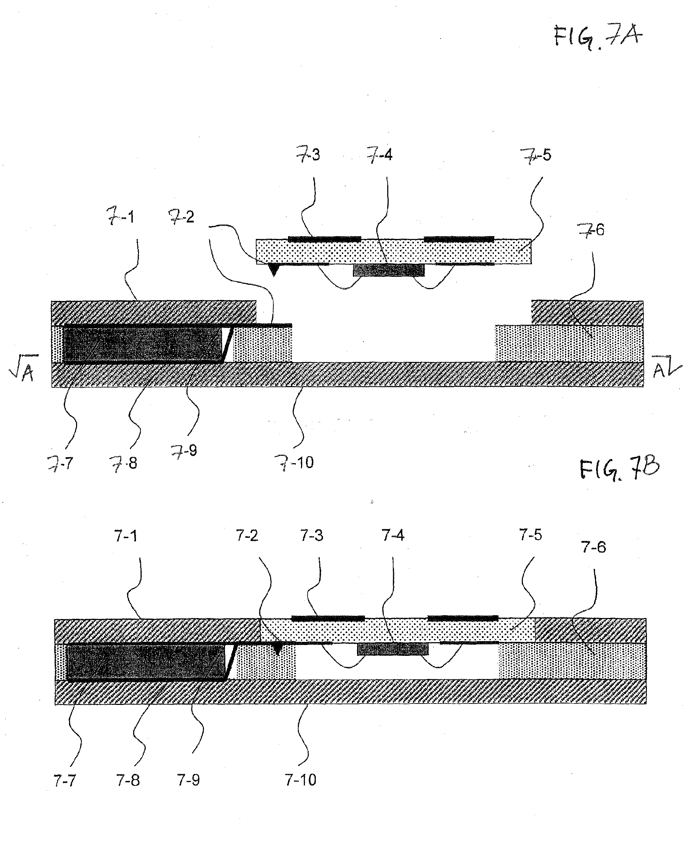

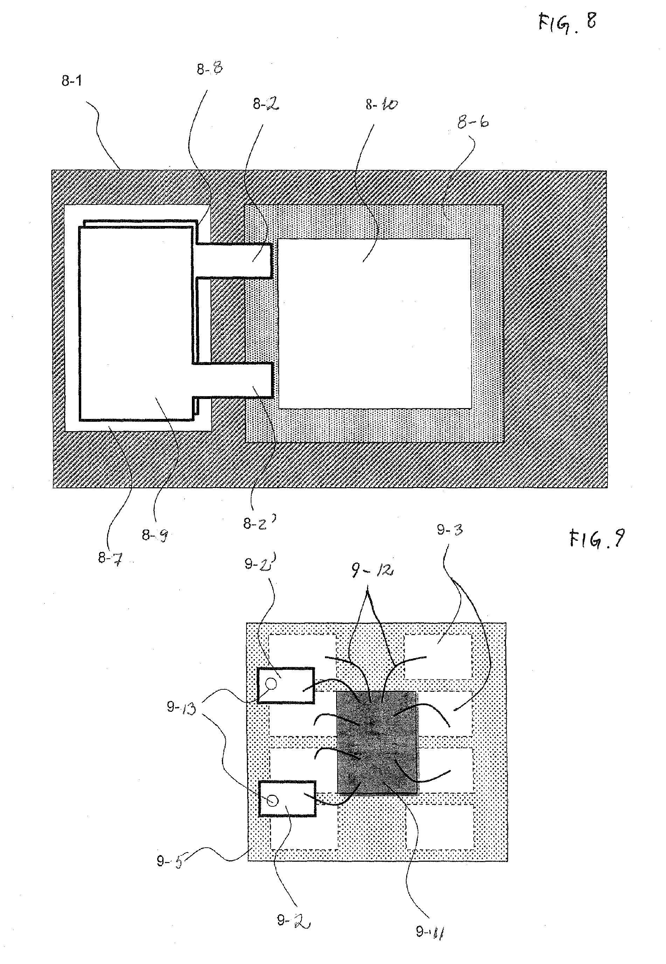

In conclusion, the control unit may be in communication with the processor (Reference for the communication 2-40 in Fig 2; 3-40 in Fig 3; 4-40 in Fig 4; 5-10 in Fig 5), with the transceiver (Reference for the communication 2-42 in Fig 2; 3-42 in Fig 3; 4-42 in Fig 4; 5-20 in Fig 5) and with the power storage unit (Reference for the communication 2-46 in Fig 2; 3-46 in Fig 3; 4-46 and 4-46' in Fig 4; 5-30 in Fig 5). The control unit may also control the communication of the processor with the power storage unit and the communication of the transceiver with the power storage unit and the communication of the processor with the transceiver (Reference for the communication 2-49, controlled by 2-48 in Fig 2; 3-49 controlled by 3-48 in Fig 3).

Figure 6 shows a signalling chart of the function of one embodiment of the power management system. In step 6-4 the power storage unit is initially charged via the power supply feed 6-2. In step 6-12 the control unit monitors the status of the SIM processor and/or the GPS receiver and/or other electronic subsystems and/or the power storage unit in the card. In step 6-14 one or more of the electronic subsystems, e.g. the GPS receiver, need more current. In step 6-16 the control unit detects or receives the power request from the GPS receiver. Alternatively or in addition the control unit may decide that the GPS receiver need more current for a certain period of time in response to the status information and/or to the communication between one or more elements and/or to predetermined values of current consumption. Next in step 6-18, the control unit may negotiate with the power storage unit whether more current is available and/or may be used. That may be checked in step 6-20 and the response may be sent to the control unit in step 6-22. The control unit may inform the requesting unit accordingly in step 6-24. In step 6-26 the power storage unit may provide more current to the GPS receiver and the GPS receiver may function as defined, e.g. by receiving positioning data for one positioning fix. The control unit may observe the state of the electronic subsystems and the power storage unit in step 6-28 and after receiving e.g. a first signal from the GPS receiver in step 6-30, the control unit may in step 6-32 transmit a second signal to the power storage unit for discontinuing the current feed.

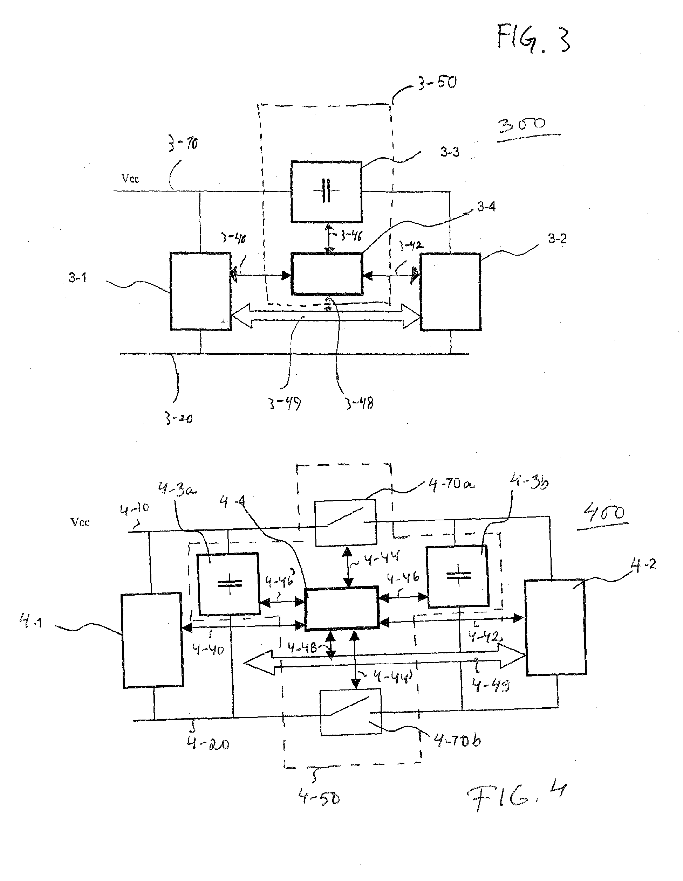

Figures 7A, 7B, 8 and 9 illustrate an embodiment of the power management system. Figure 7A is an exploded side view and Figure 7B is side view, where a micro module is inserted into the SIM card. Figure 8 is a cross section view along line A-A in Figure 7A and Figure 9 is a bottom view of the micro module (bottom is towards the card in Figures 7A and 7B).

Referring to Figures 7A and 7B, the micro module 7-5 may have SIM contacts 7-3 and SIM processor and/or electronics 7-4. It may also have connectors 7-2 for contacting to the power storage unit 7-7. Optionally there may be one or more contact bumps on contacts. The connectors may have different shapes and sizes for changing, varying the contact between connectors. One or more connectors may thus have e.g. a blade or an edge like connector made e.g. at least partly of conductive adhesive. The SIM card has a top layer 7-1 and a bottom layer 7-10. Alternatively the whole card may be presented by 7-1. A card chassis or the middle layer plastics may be presented by 7-6. The power storage unit may be placed between the layers of the SIM card. There may also be elements, like current collectors 7-8, 7-9 for collecting current(s) from the power storage unit 7-7 and for leading to connector.

Referring to Figure 8, illustrated example of the power management system has SIM Card chassis 8-1, the power storage unit 8-7 and cavity for micro module 8-10. The power storage unit may cooperate with a first bottom current collector 8-8 and with a second top current collector 8-9. Thus this implementation comprises a dual layer capacitor, where the layers may be on top of each other. The contacts for connecting to the micro module are shown as 8-2 and 8-2'.

Referring to Figure 9, the micro module 9-5 may have SIM contacts 9-3 for connecting to mobile device (but they are on the top side and therefore illustrated by dashed lines). Electronics of micro module 9-11 may be bonded to said SIM contacts by bonding wires 9-12. Contacts 9-2, 9-2' for the power storage unit are also shown. There may also be optional contact bumps 9-13 on said contacts 9-2, 9-2'.

Thus, the idea of the embodiment illustrated in Figures 7A, 7B, 8 and 9 is that a micro module may be mounted to a plastic card having one or more built-in power storage units (for example a super capacitor) so that the contacts on the bottom side of micro module hit the corresponding contacts on the storage units and form a connection. A further advantage of this embodiment is that it is industrially an easy and low-cost way to realize a connection without major modifications to a production line.

The capacitor may be implemented at least partly between the current collector layers 7-8, 8-8 and 7-9, 8-9 or at least partly between the top and the bottom layers 7-1 and 7-10, membrane or foil of the SIM card. The implementation may be made e.g. by laminating, gluing, moulding and/or lining.

The present invention enables many different modes of operations. In one mode of operation, the SIM processor operation is reduced, the power storage unit (like the supercapacitors(s)) is charging fast and the GPS system may be in an off state. In another mode of operation, the SIM operation is reduced, the power storage unit is discharging and the GPS system is in a searching mode. In still another mode of operation, the SIM card is in a normal operation mode, the power storage unit is charging in a normal way and the GPS operation is in a stand by mode.

When the positioning functionality is switched on, the SIM card may start the normal operation, like storing received short messages. The control unit may start to charge using low current, when the GPS unit remains switched off. When the position calculation is needed, the control unit may check, whether the power storage is full or above a predetermined level, or whether it needs charging. If the power storage unit needs charging, the control unit may first change to the fast charging mode until it is safe to go to the searching mode. The searching is done until the position is fixed and/or the power storage is empty or below a predetermined value, and/or a pre-selected time has lapsed.

The SIM processor may also request e.g. for the status information of the capacitor and the control unit may return said information. In one example the capacitor is e.g. 80% full charged and it takes a certain period for the capacitor to be full enough loaded. Thus the control unit may know when to turn the GPS receiver on. There may also be many other modes of operations, which may be controlled by the control unit.

In implementations utilizing different operation periods, the power management system may control the current consumption and/or voltage level by changing time used in different operation periods. For example, the operation periods may be limited, max current charging, high current, and independent. In this example during the limited operation period only one subsystem may be active and little current (low current) may be charged to the power storage unit, or the power storage unit is not charged at all. During the max current charging operation period all available current is directed to the power storage unit. During the high current operation period current is taken from the power storage unit and from the power supply feed simultaneously and supplied to a subsystem or subsystems needing the current. During the independent operation period the connection to the power supply is disconnected and current is supplied to one or more subsystem only from the power storage unit including positive and/or negative connections (ultra low noise) and other subsystems may be connected to the power supply feed and/or other power storage units. Depending on the implementation, the power management system may control the subsystems, or one, or some of the separately, i.e. they may be in different operation periods compared to others, or all controlled subsystems are in the same operation period.

The invention is cost efficient and easy to manufacture thus enabling the use of one or more electronic systems embedded in a smart card or in a subscriber identity module in a case when its/their peak current requirement is above the maximum current consumption limit of the card.

The invention and its embodiments provide many advantages. Not only low current consumption receivers, but also high current consumption receivers may be used. The subsystems (such as GPS or Galileo receivers) that may typically consume 20-100 mA for a minimum of 1-25 seconds to make a positioning fix, which is well above the SIM card maximum current feed, may e.g. also be used. Also the user equipment that has previously exceeded the maximum current/power consumption limit of the subsystem and/or consumption limitation of the card may now be used.

The invention and its embodiments also work well with e.g. Li-ion rechargeable battery and other types of batteries and with different kinds of capacitors. The capacitors used to store the power may be made e.g. of mesoporous carbons and polymers, of hydrous Ruthenium Oxide (RuO2), and/or of an alkaline (KOH) electrolyte material. The capacitors that may be used to store and/or to discharge the power may have a layered structure and be embedded or built or constructed, for example laminated, between the layers of a printed circuit board. The printed circuit board may be flexible or rigid.

The power management system as described herein may be used in connection with the apparatus and method for locating user equipment as described in the European Patent application EP05106288.3, and which is hereby incorporated by reference. The power management system as described herein may be used in connection with the antenna arrangement as described in the European Patent application EP05109729.3, and which is hereby incorporated by reference.

It will be obvious to a person skilled in the art that, as the technology advances, the inventive concept can be implemented in various ways. The invention and its embodiments are not limited to the examples described above but may vary within the scope of the claims.

## Claims

1. A power management system (2-50, 3-50) for a smart card module (1-4, 5-1) comprising contacts (5-3) for connecting to a mobile device (1-1), **characterized in that** the system comprises:
at least one power storage unit (2-3, 3-3 5-6) for charging power from a power supply feed of the mobile device (1-1) via one or more contacts (5-3); and
a control unit (2-4, 3-4, 5-4) for controlling the charging of the at least one power storage unit (2-3, 3-3, 5-6) and for controlling the discharging of the at least one power storage unit (2-3, 3-3, 5-6) to at least one element (2-1, 2-2, 3-1, 3-2, 5-2, 5-5) in the smart card module (1-4, 5-1).

2. A power management system (2-50, 3-50) according to claim 1, **characterized in that** the control unit (2-4, 3-4, 5-4) is adapted to control the feeding of power from the power supply feed of the mobile device (1-1) to at least one element (2-1, 2-2, 3-1, 3-2, 5-2, 5-5) in the smart card module (1-4, 5-1).

3. A power management system (2-50, 3-50) according to claims 1 or 2, **characterized in that** the control unit (2-4, 3-4, 5-4) is adapted to control the total current consumption of the smart card module (1-4, 5-1).

4. A power management system (2-50, 3-50) according to any one of the previous claims 1 to 3, **characterized in that** the control unit (2-4, 3-4, 5-4) is adapted to detect the power or current consumption of the at least one element (2-1, 2-2, 3-1, 3-2, 5-2, 5-5) in the smart card module (1-4, 5-1) and if the current consumption of the at least one element (2-1, 2-2, 3-1, 3-2, 5-2, 5-5) exceeds a predetermined level to supply for more power or current from the at least one power storage unit (2-3, 3-3, 5-6) for the operation of the at least one element (2-1, 2-2, 3-1, 3-2, 5-2, 5-5) and/or to restrict and/or to stop the operation of the at least one element (2-1, 2-2, 3-1, 3-2, 5-2, 5-5).

5. A power management system (2-50, 3-50) according to any one of the previous claims 1 to 4, **characterized in that** the control unit (2-4, 3-4, 5-4) is adapted to control the charging of the at least one power storage unit (2-3, 3-3, 5-6) at least partly in response to the function of the maximum current feed from the mobile device (1-1) to the smart card module (1-4, 5-1) via one or more of its contacts (5-3) and the current consumption of at least one element (2-1, 2-2, 3-1, 3-2, 5-2, 5-5) in the smart card module (1-4, 5-1).

6. A power management system (2-50, 3-50) according to any one of the previous claims 1 to 5, **characterized in that** the control unit (2-4, 3-4, 5-4) is adapted to detect the status information on the at least one power storage unit (2-3, 3-3, 5-6) and receive information from at least one element (2-1, 2-2, 3-1, 3-2, 5-2, 5-5) of the smart card module (1-4, 5-1) and in response to said information control the charging of the at least one power storage unit (2-3, 3-3, 5-6) and/or the discharging of the power storage unit (2-3, 3-3, 5-6).

7. A power management system (2-50, 3-50) according to any one of the previous claims 1 to 6, **characterized in that** the control unit (2-4, 3-4,5-4) is adapted to adjust the charging voltage and/or the charging current according to the characteristics of the at least one power storage unit (2-3, 3-3, 5-6).

8. A power management system (2-50, 3-50) according to any one of the previous claims 1 to 7, **characterized in that** the control unit (2-4, 3-4, 5-4) is adapted to control the operation of the at least one power storage unit (2-3, 3-3, 5-6) and/or at least one element (2-1, 2-2, 3-1, 3-2, 5-2, 5-5) in the smart card module (1-4, 5-1) by reducing its/their operation and/or by changing its/their mode of operation.

9. A power management system (2-50, 3-50) according to any one of the previous claims 3 to 8, **characterized** the current consumption is a peak current consumption or an average current consumption.

10. A power management system (2-50, 3-50) according to any one of the previous claims 1 to 9, **characterized in that** the at least one power storage unit (2-3, 3-3, 5-6) comprises one or more capacitors and/or supercapacitors and/or ultracapacitors and/or one or more batteries.

11. A power management system (2-50, 3-50) according to claim 10, **characterized in that** one or more capacitors and/or supercapacitors and/or ultracapacitors of the at least one power storage unit (2-3, 3-3, 5-6) has a layered structure and is/are constructed between the layers of a printed circuit board of the smart card module (1-4, 5-1).

12. A power management system (2-50, 3-50) according to any one of the previous claims 1 to 11, **characterized in that** smart card module (1-4, 5-1) comprises a satellite positioning system receiver (2-2, 3-2, 5-5) for determining positioning data and/or a processor (2-1, 3-1, 5-2) for calculating the current location of the mobile device (1-1) and the power management (2-50, 3-50) system is adapted to feed current to said receiver (2-2, 3-2, 5-5) and/or to said processor (2-1, 3-1, 5-2).

13. A power management system (4-50) according to any one of the previous claims 1 to 12, **characterized in that** the power management system (4-50) comprises two or more power storage units (4-3a, 4-3b), and one ore more switches (4-70a, 4-70b) for connecting to and disconnecting from the one or more contacts at least one of the two or more power storage units, wherein the controller (4-4) is arranged to control the one or more switches and the two or more power storage units independently of each other.

14. A smart card module (1-4, 5-1), **characterized in that** it comprises a power management system (2-50, 3-50) according to any one of the previous claims 1 to 13.

15. A smart card module (1-4, 5-1) according to claim 14, **characterized in that**
it further comprises an RF receiver for use in a mobile device (1-1), the RF receiver comprising
- receiving means adapted to receive a signal from a satellite positioning system; and
the power management (2-50, 3-50) system is adapted to feed current to said RF receiver.

16. A smart card module (1-4, 5-1) according to claim 15, **characterized in that** the power management system (4-50) comprises two or more power storage units (4-3a, 4-3b), and two or more switches (4-70a, 4-70b) for connecting to and disconnecting from the power feed and/or a ground at least one of the two or more power storage units (4-3b) and the RF receiver connected to the at least one of the two or more power storage units, wherein the controller (4-4) is arranged to control the one or more switches and the two or more power storage units independently of each other.

17. A smart card module according to claim 14, 15, or 16, **characterized in that** the smart card module is a subscriber identity module.

18. A device (1-1), **characterized in that** it comprises a smart card module (1-4, 5-1) according to claim 14, 15, 16 or 17.

19. A power management method for a smart card module (1-4, 5-1) comprising contacts (5-3) for connecting to a mobile device (1-1), **characterized by**
charging energy from a power supply feed of the mobile device (1-1) via one or more contacts (5-3) to at least one power storage unit (2-3, 3-3, 5-6); and
discharging energy from the at least one power storage unit (2-3, 3-3, 5-6) to at least one element (2-1, 2-2, 3-1, 3-2, 5-2, 5-5) in the smart card module (1-4, 5-1).

20. A control unit (2-4, 3-4, 5-4) for a power management system (2-50, 3-50) for a smart card module (1-4, 5-1) comprising contacts (5-3) for connecting to a mobile device (1-1), **characterized in that** the unit (2-4, 3-4, 5-4) is adapted:
to control the charging of energy from a power supply feed of the mobile device (1-1) to at least one power storage unit (2-3, 3-3, 5-6) via one or more contacts (5-3); and/or
to control the discharging of the at least one power storage unit (2-3, 3-3, 5-6) to at least one element (2-1, 2-2, 3-1, 3-2, 5-2, 5-5) in the smart card module (1-4, 5-1).

21. A power storage unit (7-7) for a power management system for a smart card module card comprising contacts for connecting to corresponding contacts, **characterized in that**: the power storage unit (2-3, 3-3 5-6) comprises means for charging power from a power supply feed of the mobile device via one or more contacts; means for storing the power and means for discharging the power to at least one element in the smart card module.
